# EUROPÄISCHE PATENTSCHRIFT

(11) **EP 0 835 731 B1**
(45) Veröffentlichungstag und Bekanntmachung des Hinweises auf die Patenterteilung: **27.01.1999**
(21) Anmeldenummer: 97121094.3
(22) Anmeldetag: 13.10.1995
(51) Int. Cl.: B29C 45/17

(54) **Spritzgiessmaschine**
Injection moulding machine
Machine à mouler par injection

(30) Priorität: 14.10.1994 AT 1950/94
(43) Veröffentlichungstag der Anmeldung: 15.04.1998
(62) Teilanmeldung aus: 95933228.9
(73) Patentinhaber: ENGEL MASCHINENBAU GESELLSCHAFT MBH, A-4311 Schwertberg (AT)
(72) Erfinder: Naderhirn, Helmut, 4320 Perg (AT)
(74) Vertreter: Torggler, Paul Norbert

(56) Entgegenhaltungen:
- WO-A-95/04643
- DE-A- 4 320 366
- DE-U- 9 402 825

## Beschreibung

Die Erfindung bezieht sich auf eine holmlose Spritzgießmaschine mit einem Maschinenrahmen , einer daran gelagerten ortsfesten Formaufspannplatte und einer über einen Schließmechanismus bewegbaren Formaufspannplatte , wobei sich Teile des Maschinenrahmens unter dem Einfluß der während des Schließvorganges auftretenden Schließkraft nach außen verbiegen und die beiden Formaufspannplatten derart gelenkig gelagert sind, daß sie trotz der sich aufbiegenden Teile des Maschinenrahmens zueinander parallel bleiben.

Eine derartige Spritzgießmaschine ist beispielsweise aus der DE-U1-92 12 480 bekannt. Aufgabe der Erfindung ist es, die Konstruktion zu vereinfachen und trotzdem eine gute Führung der Formaufspannplatten und eine absolute Parallelität der beiden Formhälften auch bei sehr hohen Formauftreibkräften zu erzielen.

Die Aufgabe wird erfindungsgemäß durch die Merkmale der Patentansprüche 1 oder 2 gelöst.

Mit einer solchen Konstruktion kann man die bisher bei holmlosen Spritzgießmaschinen vorgesehenen Achszapfen vermeiden. Wenn sich bei einer erfindungsgemäßen Spritzgießmaschine unter dem Einfluß der Schließkraft die beiden Schenkel als Teile des Maschinenrahmens um gedachte untere Drehachsen nach außen verschwenken, verschwenken sich die ortsfeste Formaufspannplatte und/oder der Schließmechanismus bzw. die bewegbare Formaufspannplatte um gedachte obere Schwenkachsen gegensinnig.

Die Erfindung kann durch verschiedene Konstruktionen verwirklicht werden. Wesentlich ist dabei nur, daß die durch die Schließkraft bewirkte Verformung bzw. Verbiegung des Verbindungsbereiches von ortsfester Formaufspannplatte bzw. Schließmechanismus einerseits und Maschinenrahmen andererseits wenigstens annähernd die Aufweitung des oben offenen Maschinenrahmens kompensiert.

Vorzugsweise bestehen die Halteteile bzw. verbiegbaren Bereiche ebenso wie der Maschinenrahmen aus Stahl. Die Halteteile müssen aber nicht einstückig mit dem Maschinenrahmen sein, sondern können als gesonderte Bauteile ausgeführt werden. Dadurch eröffnet sich die Möglichkeit, Halteteile und Maschinenrahmen aus unterschiedlichem Material zu fertigen und insbesondere die Elastizität der Halteteile größer als die des Maschinenrahmens zu machen.

Nachfolgend werden verschiedene Ausführungsbeispiele der Erfindung anhand der Figuren der beiliegenden Zeichnungen eingehend beschrieben.

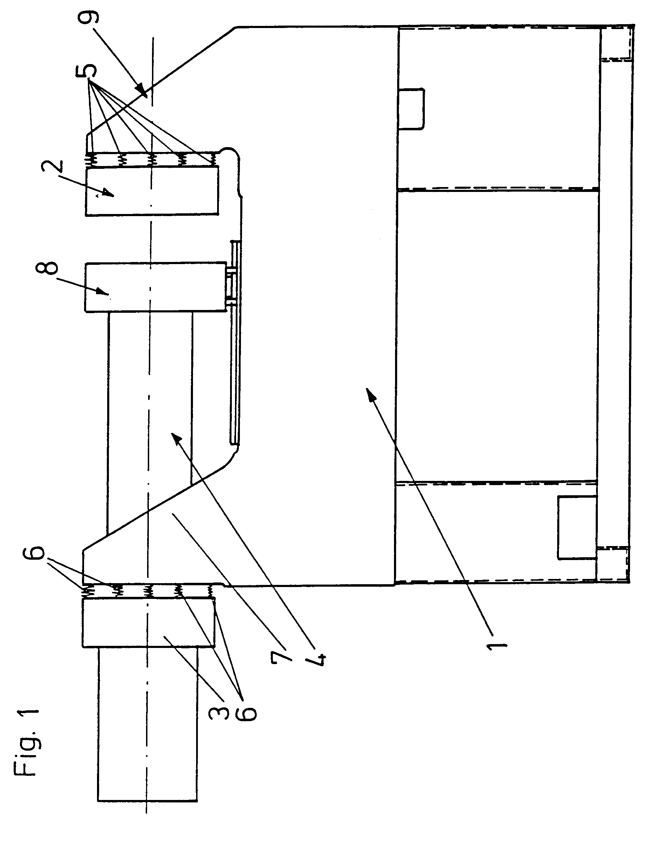

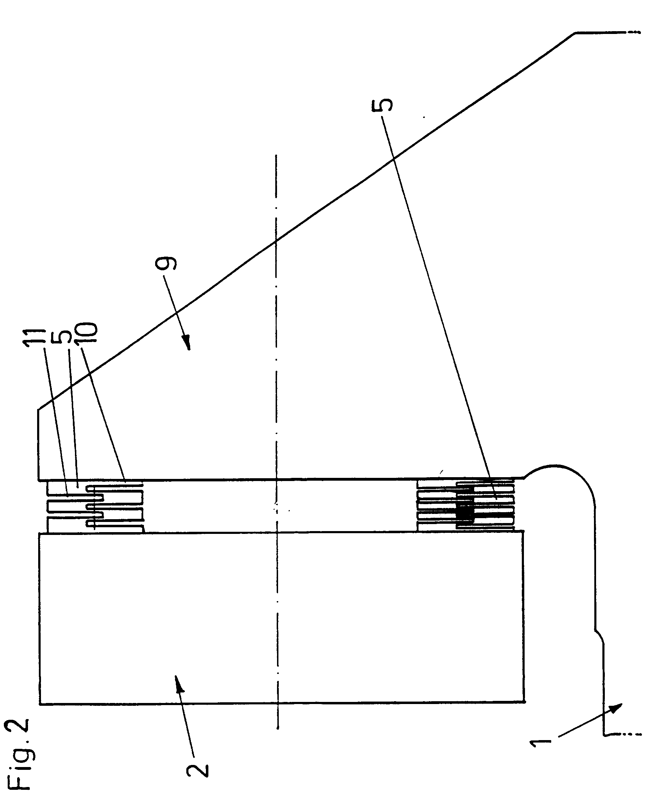

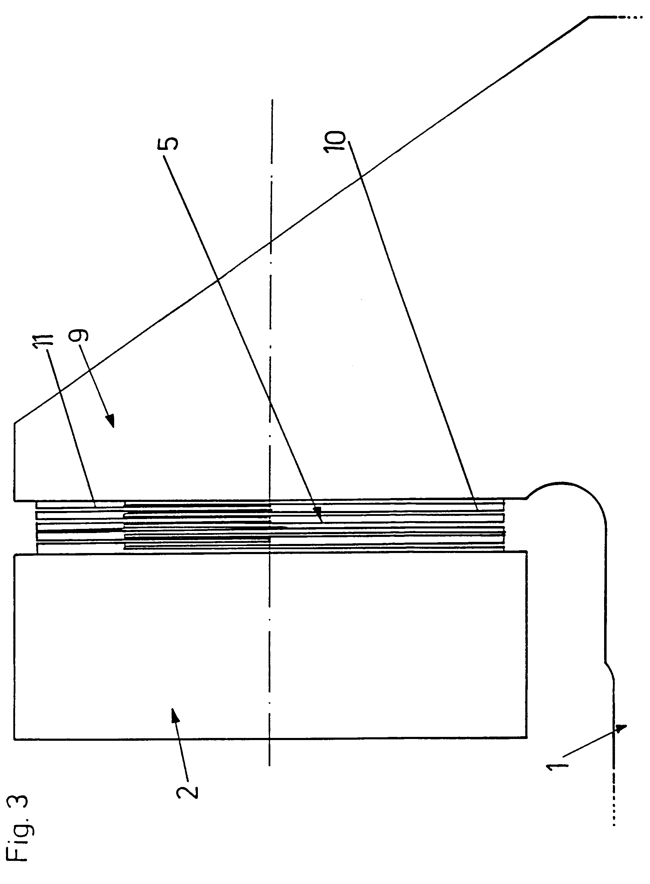

Die Fig. 1 zeigt eine schematisch gehaltene Seitenansicht einer Spritzgießmaschine und die Fig. 2 zeigt schematisch eine Seitenansichten der ortsfesten Formaufspannplatte und des dazugehörigen Teiles des Maschinenrahmens. Die Fig. 3 zeigt eine Seitenansicht auf ein Ausführungsbeispiel einer erfindungsgemäßen Spritzgießmaschine.

Der wesentliche Teil der Spritzgießmaschine ist der hier im wesentliche C-förmige Maschinenrahmen 1, der über einen Rahmenschenkel 9 die ortsfeste Formaufspannplatte 2 und über einen Rahmenschenkel 7 einen Flansch 3 des Schließmechanismus 4 und somit auch die bewegbare Formaufspannplatte 8 trägt.

In Fig. 1 handelt es sich beim Schließmechanismus um eine hydraulische Kolben-Zylindereinheit. Es könnte jedoch auch ein elektromechanischer Schließmechanismus, beispielsweise auch ein Kniehebelmechanismus gelagert sein. Über den Schließmechanismus 4 wird die bewegbare Formaufspannplatte 8 verfahren und die Form geschlossen.

In Fig. 1 sind sowohl die ortsfeste Formaufspannplatte 2 als auch der Schließmechanismus 4 mittels mehrerer gesonderter Halteteile 5, 6 am Maschinenrahmen 1 gelagert. Die Halteteile 5 werden zwischen der ortsfesten Formaufspannplatte 2 und dem Maschinenrahmen auf Druck und die Halteteile 6 zwischen der Antriebsplatte 3 und dem Maschinenrahmen 1 auf Zug belastet. Es wäre jedoch auch möglich, den Flansch 3 des Schließmechanismus 4 an der Innenseite des Rahmenschenkels 7 zu lagern, d. h. an der den Formaufspannplatten 2, 8 zugewendeten Seite, sodaß auch die Halteteile 6 auf Druck beansprucht würden. Die über die Höhe der Formaufspannplatte 2 bzw. des Flansches 3 verteilten Halteteile 5, 6 weisen unterschiedliche Festigkeit (höhere Elastizität) auf, wobei die unteren Halteteile 5, 6 geringere Festigkeit als die oberen Halteteile 5, 6 aufweisen.

Werden die Schenkel 7, 9 des Maschinenrahmens 1 oben auseinandergedrückt, so können die ortsfeste Formaufspannplatte 2 und/oder der Schließmechanismus 4 eine Kippbewegung relativ zum Maschinenrahmen 1 durchführen, wodurch die Plattenparallelität der Formaufspannplatten 2, 8 erhalten bleibt.

Die unterschiedliche Festigkeit bzw. Elastizität der Halteteile 5, 6 kann durch unterschiedliche Formgebung erreicht werden. So können die Halteteile 5, 6 unterschiedliche Dimensionen aufweisen oder mit Materialschwächungen, beispielsweise Schlitzen versehen sein.

Ebenso kann die unterschiedliche Elastizität und Festigkeit durch den Einsatz unterschiedlicher Materialien erzielt werden. Vorteilhaft sind die Halteteile aus Stahl, insbesondere aus Federstahl gefertigt.

In Fig. 2 ist die ortsfeste Formaufspannplatte 2 mittels zweier Halteteile 5 am Maschinenrahmen 1 gelagert, wobei beide Halteteile 5 mit Schlitzen 10, 11 versehen sind, jedoch der untere Halteteil 5 mehr Schlitze 10, 11 oder tiefere Schlitze 10, 11 als der obere Halteteil 5 aufweist und daher geringere Festigkeit.

Im erfindungsgemäßen Ausführungsbeispiel nach der Fig. 3 ist nur ein Halteteil 5 vorgesehen, der hier die ortsfeste Formaufspannplatte 2 trägt. Dieser Halteteil 5 ist an der unteren Seite mit tieferen Schlitzen 10 und an der Oberseite mit weniger tiefen Schlitzen 11 versehen. Die Schlitze 10, 11 überschneiden sich, so daß der Halteteil 5 harmonikaartig zusammendrückbar ist. Auf diese Art und Weise wird der Halteteil 5 an der Unterseite mehr zusammengedrückt als an der Oberseite und die ortsfeste Formaufspannplatte 2 kann, wenn sich der Maschinenrahmen 1 unter dem Aufbringen der Schließkraft verformt und der Rahmenschenkel 9 nach außen kippt, eine Kippbewegung relativ zum Rahmenschenkel 9 bzw. zum Maschinenrahmen 1 durchführen. Der Halteteil 5 bildet somit einen verbiegbaren als achszapfloses Gelenk wirkenden Bereich.

Der Halteteil bzw. verbiegbare Bereich 5 könnte auch leporelloartig ausgeführt sein.

## Patentansprüche

1. Holmlose Spritzgießmaschine mit einem Maschinenrahmen (1), einer daran gelagerten ortsfesten Formaufspannplatte (2) und einer über einen Schließmechanismus bewegbaren Formaufspannplatte (8), wobei sich Teile (7, 9) des Maschinenrahmens (1) unter dem Einfluß der während des Schließvorganges auftretenden Schließkraft nach außen verbiegen und die beiden Formaufspannplatten (2, 8) derart gelenkig gelagert sind, daß sie trotz der Aufbiegung des Maschinenrahmens (1) zueinander parallel bleiben, dadurch gekennzeichnet, daß zwischen der ortsfesten Formaufspannplatte (2) und einem sich aufbiegenden Teil des Maschinenrahmens (9) ein als Gelenk wirkender verbiegbarer Bereich (5) angeordnet ist, der beim Aufbringen der Schließkraft verbogen wird, wodurch die ortsfeste Formaufspannplatte (2) ohne Verwendung von Achszapfen relativ zum sich aufbiegenden Teil (9) des Maschinenrahmens (1) gekippt wird.

2. Holmlose Spritzgießmaschine mit einem Maschinenrahmen (1), einer daran gelagerten ortsfesten Formaufspannplatte (2) und einer über einen Schließmechanismus bewegbaren Formaufspannplatte (8), wobei sich Teile (7, 9) des Maschinenrahmens (1) unter dem Einfluß der während des Schließvorganges auftretenden Schließkraft nach außen verbiegen und die beiden Formaufspannplatten (2, 8) derart gelenkig gelagert sind, daß sie trotz der Aufbiegung des Maschinenrahmens (1) zueinander parallel bleiben, dadurch gekennzeichnet, daß zwischen dem Schließmechanismus (4) der bewegbaren Formaufspannplatte (8) und einem sich aufbiegenden Teil des Maschinenrahmens (7) ein als Gelenk wirkender verbiegbarer Bereich (6) angeordnet ist, der beim Aufbringen der Schließkraft verbogen wird, wodurch die bewegbare Formaufspannplatte (8) ohne Verwendung von Achszapfen jeweils relativ zum sich aufbiegenden Teil (7) des Maschinenrahmens (1) gekippt wird.

## Claims

1. A tiebar-less injection moulding machine comprising a machine frame (1), a stationary mould mounting plate (2) mounted thereon and a mould mounting plate (8) movable by way of a closing mechanism, wherein parts (7, 9) of the machine frame (1) bend outwardly under the influence of the closing force which occurs during the closing operation and the two mould mounting plates (2, 8) are pivotably mounted in such a way that they remain parallel to each other in spite of the machine frame (1) bending open, characterised in that arranged between the stationary mould mounting plate (2) and a part of the machine frame (9) which bends open is a bendable region (5) which acts as a joint and which is bent when the closing force is applied, whereby the stationary mould mounting plate (2) is tilted relative to the part (9) of the machine frame (1) which bends open, without the use of pivot trunions.

2. A tiebar-less injection moulding machine comprising a machine frame (1), a stationary mould mounting plate (2) mounted thereon and a mould mounting plate (8) movable by way of a closing mechanism, wherein parts (7, 9) of the machine frame (1) bend outwardly under the influence of the closing force which occurs during the closing operation and the two mould mounting plates (2, 8) are pivotably mounted in such a way that they remain parallel to each other in spite of the machine frame (1) bending open, characterised in that arranged between the closing mechanism (4) of the movable mould mounting plate (8) and a part of the machine frame (7) which bends open is a bendable region (6) which acts as a joint and which is bent when the closing force is applied, whereby the movable mould mounting plate (8) is respectively tilted relative to the part (7) of the machine frame (1) which bends open, without the use of pivot trunions.

## Revendications

1. Machine à mouler par injection sans tirants, comprenant un bâti de machine (1), un plateau porte-moule (2) fixe en position, monté sur ce bâti, et un plateau porte-moule (8) qui peut être mis en mouvement au moyen d'un mécanisme de fermeture, des parties (7, 9) du bâti (1) de la machine fléchissant vers l'extérieur sous l'influence de la force de fermeture qui se développe pendant l'opération de fermeture, et les deux plateaux porte-moules (2, 8) étant montés de façon articulée de manière à rester parallèles entre eux en dépit de la flexion d'ouverture du bâti (1) de la machine, caractérisée en ce qu'entre le plateau porte-moule fixe (2) et une partie (9) du bâti de la machine qui fléchit dans le sens de l'ouverture, est interposée une région flexible (5), se comportant comme une articulation et qui fléchit lors de l'application de la force de fermeture, de sorte que la plateau porte-moule fixe (2) s'incline par rapport à la partie (9) du bâti (1) de la machine qui fléchit dans le sens de l'ouverture sans utilisation de tourillons.

2. Machine à mouler par injection sans tirants, comprenant un bâti de machine (1), un plateau porte-moule (2) fixe en position, monté sur ce bâti, et un plateau porte-moule (8) qui peut être mis en mouvement au moyen d'un mécanisme de fermeture, des parties (7, 9) du bâti (1) de la machine fléchissant vers l'extérieur sous l'influence de la force de fermeture qui se développe pendant l'opération de fermeture, et les deux plateaux porte-moules (2, 8) étant montés de façon articulée de manière à rester parallèles entre eux en dépit de la flexion d'ouverture du bâti (1) de la machine, caractérisée en ce qu'entre le mécanisme de fermeture (4) du plateau porte-moule mobile (8) et une partie (7) du bâti de la machine qui fléchit dans le sens de l'ouverture, est interposée une région flexible (5), se comportant comme une articulation et qui fléchit lors de l'application de la force de fermeture, de sorte que la plateau porte-moule mobile (8) s'incline par rapport à la partie (7) du bâti (1) de la machine qui fléchit dans le sens de l'ouverture sans utilisation de tourillons.
